# EUROPEAN PATENT SPECIFICATION

(11) **EP 2 696 149 B1**
(45) Date of publication and mention of the grant of the patent: **23.01.2019**
(21) Application number: 11871409.6
(22) Date of filing: 25.10.2011
(51) Int. Cl.: F24H 9/00, F24H 4/04, F24H 1/18, F28D 20/00, F24H 1/20, F28D 1/06

(54) **WATER TANK FOR HEAT PUMP WATER HEATER**
WASSERTANK FÜR WÄRMEPUMPENDURCHLAUFERHITZER
RÉSERVOIR D'EAU POUR CHAUFFE-EAU À POMPE À CHALEUR

(30) Priority: 02.09.2011 CN 201110258711
(43) Date of publication of application: 12.02.2014
(73) Proprietor: Haier Group Corporation, Qingdao, Shandong 266101 (CN); Qingdao Economic And Technological Development District Haier Water Heater Co., Ltd, Qingdao, Shandong 266101 (CN)
(72) Inventor: CHEN, Bingquan, Qingdao Shandong 266101 (CN); WANG, Jianliang, Qingdao Shandong 266101 (CN); BAI, Longliang, Qingdao Shandong 266101 (CN); LUO, Yantao, Qingdao Shandong 266101 (CN)
(74) Representative: Stork Bamberger Patentanwälte PartmbB
(86) International application number: PCT/CN2011/081244
(87) International publication number: WO 2013/029298

(56) References cited:
- EP-A1- 0 079 833
- CA-C- 2 059 061
- CN-A- 101 482 325
- CN-A- 101 482 326
- CN-A- 101 629 757
- CN-A- 102 012 104
- DE-A1- 19 919 003
- DE-A1-102010 004 984
- GB-A- 1 466 980
- US-A- 4 918 938
- US-A1- 2006 032 244

## Description

### Background of the invention

The present invention relates to a water tank for a heat pump water heater.

### Description of the related art

The Chinese Patent application 201010587195.6 (application number) discloses a water tank for a heat pump water heater, comprising a water tank liner of which the external is wound by a second, fourth, fifth, seventh and eighth condenser pipes. The condenser pipes wind about the lateral and the bottom of the water tank liner respectively. Thus, the heat exchange efficiency may be improved. However, that water tank has the following deficiencies: due to the uneven spherical shell of bottom of the water tank liner, the external wound coiler is hard to be fixedly mounted on the outside surface of the spherical shell and the contact between them is defective tightness, leading to the lower heat exchange efficiency; furthermore, after the usage of the water heater for a long time, the water scale is easily formed inside the water tank liner, and deposited to the bottom of the spherical shell which is on the lower seal head of the water tank liner, so that the heat transfer efficiency is influenced.

US 2006/032244 A1 discloses that a water-heating dehumidifier includes a refrigerant loop including a compressor, at least one condenser, an expansion device and an evaporator including an evaporator fan. The condenser includes a water inlet and a water outlet for flowing water therethrough or proximate thereto, or is affixed to the tank or immersed into the tank to effect water heating without flowing water. The immersed condenser design includes a self-insulated capillary tube expansion device for simplicity and high efficiency. In a water heating mode air is drawn by the evaporator fan across the evaporator to produce cooled and dehumidified air and heat taken from the air is absorbed by the refrigerant at the evaporator and is pumped to the condenser, where water is heated. When the tank of water heater is full of hot water or a humidistat set point is reached, the water-heating dehumidifier can switch to run as a dehumidifier.

DE 10 2010 004984 A1 discloses that the accumulator has a heat exchanger (2) arranged at a lower end of a storage unit (1) for removing heat. Supply lines (21, 31, 41) and return lines (22, 32, 42) are provided with thermal insulation, and run into the storage unit. The insulation of the supply and/or the return lines is interrupted for direct receiving or delivering of heat from and/or to storage water over a limited area. Solar heat is supplied to the storage unit by the exchanger. A funnel-shaped cover (24) covers the exchanger that is oriented to bottom of the storage unit with a large opening.

DE 199 19 003 A1 discloses that the tank has a container (1) with flow (2,2",2"') and return (3,3",3"') connections for a heated medium at one and a covered area (5) at the opposite end. A coiled flow heater (6) for heating water is arranged in the upper part of a sleeve (9) surrounding the covered area. A drinking water container (12) with an additional heater (12) and a warm water outlet (10) is connected above the tank container. The sleeve forms an annular space (8) with the container wall (7). The drinking water container has the same cross-section as the tank container.

EP 0 079 833 A1 discloses that the heat pump comprises an evaporator assembly (10) equipped with a motor-ventilator set and with a serpentine evaporator (12), a compressor assembly (20) comprising a compressor (22) and supply and control housings (23, 24), as well as a serpentine (32) condenser assembly (30). This serpentine is accommodated in a closed box (31) constituting a bearing plinth for the compressor assembly (20) and the evaporator assembly (10) of the heat pump, the box being filled with a heat-insulating material (33) and being exposed to ambient air by its lateral surface (43) only.

CA 2 059 061 A1 discloses that an insulating support base for a cylindrical electric water heater tank. The base is formed of a rigid molded foam material and defines a flat circular base having a concentrically disposed support dome on a top face thereof and shaped for close fit within a bottom cavity of a hot water tank for support engagement with a dome shaped bottom wall of an inner casing of the tank. The support dome also guides the inner casing to permit it to be automatically centered on the support base. A spacer ledge is defined about the support dome and extends to an outer edge of the flat circular base. The spacer ledge accommodates an insulating jacket positioned about the tank inner casing with the outer edge of the circular base being disposed in close fit within a lower marginal edge portion of an outer cylindrical casing of the tank to position the outer casing equidistantly spaced about the inner casing with the insulating jacket therebetween.

### Summary of the invention

In order to solve the above described problem, the aim of the present invention is to provide a water tank for a heat pump water heater according to claim 1, so as to achieve the fixation for the coil pipe on the bottom of the liner without influencing the heat exchange efficiency by providing the water tank liner with a concave structure.

Further improvements and embodiments are provided in the dependent claims.

The water tank for a heat pump water heater according to the present invention comprises a water tank liner 10 having an intermediate barrel 100 and a lower seal head 102 disposed at the bottom of the intermediate barrel 100, said intermediate barrel 100 is wound by a first heat pump coil pipe 11, the bottom of said lower seal head 102 of the water tank liner 10 has a chamber formed by concaving inwardly; a second heat pump coil pipe 12 closely against the inner wall of said chamber and a fixation means for fixing said second heat pump coil pipe 12 are provided in said chamber.

In this way, the fixation for coil pipes at the bottom of the liner is achieved, meanwhile the heat exchange efficiency may not be influenced.

Alternatively, said fixation means is made of some materials having certain elasticity; said fixation means is embedded to said chamber by its own elastic deformation and compresses said second heat pump coil pipe tightly so as to fix said second heat pump coil pipe in said chamber.

Alternatively, said fixation means comprises a supporting pad layer 16 and a support pipe 15, said supporting pad layer 16 consists of plurality of pad individuals having certain elasticity, and has a central hole formed by these pad individuals; said supporting pipe 15 is embedded to the central hole of said supporting pad layer 16.

In this way, the fixation for the coil pipes at the bottom is achieved.

Alternatively, said supporting pad layer 16 is a supporting pad layer 16 manufactured by the expandable polystyrene.

Alternatively, said first heat pump coil pipe 11 is connected to said second heat pump coil pipe 12 for forming a loop.

In this way, the circulation of the refrigerant is achieved.

Alternatively, the side wall of said water tank liner 10 is provided with a concave structure extending spirally, said first heat pump coil pipe 11 winds about the concave structure extending spirally by being closely against the concave structure.

In this way, the contact area between the first heat pump coil pipe and the side wall of the liner is increased so as to further improve the heat exchange efficiency.

Alternatively, said first heat pump coil pipe 11 is fixed by a fixation clip 110.

In this way, the coil pipe is fixed on the side wall of the liner.

Alternatively, the water tank for a heat pump water heater further comprises a first electrical heater 13 disposed on the interior upper end of said water tank liner 10 and a second electrical heater 14 disposed on the interior lower end of said water tank liner 10.

In this way, the water tank according to the present invention can achieve the energy-saving and has the quick start feature of the electrical heater as well.

Alternatively, the bottom of said seal head 10 is provided with a bottom opening in which a cannular metal inner barrel 103 with a bottom is disposed, said metal inner barrel 103 is disposed in a manner that makes its opening be downward, and the edge of the opening of the metal inner barrel is welded with the edge of the bottom opening of said lower seal head 102 so that said chamber is formed by the metal inner barrel 103.

Preferably, the bottom of the metal inner barrel 103 is formed as a ball coronary projecting towards the inside of the water tank liner 10.

In this way, there is no water scale accumulated on a contact area between the bottom of the liner and the heating coil pipe, so that the heat exchange efficiency may be improved.

### Brief description of the drawings

Figure 1 is a partial section view showing the structure of the water tank for a heat pump water heater according to the present invention;
Figure 2 is a schematic view of the structure of a fixation clip according to the present invention;
Figure 3 is a partial schematic view of the concave structure of side wall of the water tank according to the present invention;
Figure 4 is a top view of the structure of a second heat pump coil pipe according to the present invention;
Figure 5 is a partial enlarged view of the water tank for a heat pump water heater according to the present invention;
Figure 6 is a top view of the supporting pad layer according to the present invention.

### Detailed description of the invention

The water tank for a heat pump water heater according to the present invention will be introduced in details by referring to the above figures.

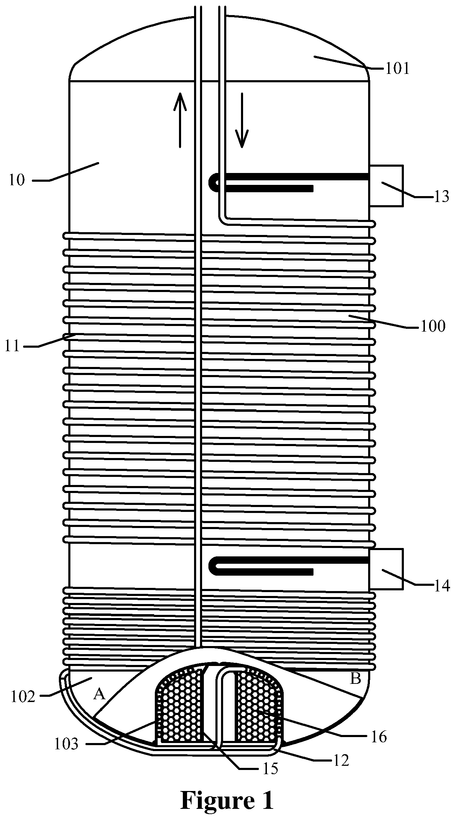

As the figure 1 shown, the water tank for a heat pump water heater comprises a water tank liner 10, a first heat pump coil pipe 11 wound about the lateral of the liner 10 and a second heat pump coil pipe 12 closely against the bottom of the liner 10, a first and a second electrical heater 13, 14 respectively disposed on the upper and lower portion of the liner 10. In addition, the water tank for a heat pump water heater further comprises a fixation means for fixing the second heat pump coil pipe 12. The fixation means comprises a supporting pipe 15 and a supporting pad layer 16.

The liner 10 is cylindric. The external of the liner 10 is covered with an insulating layer of which the external is provided with a housing (not shown). The liner 10 comprises an intermediate barrel 100, an upper seal head 101 and a lower seal head 102. The intermediate barrel 100 is formed to be cylindric by welding the stainless steel or carbon steel plate coated with enamel. The upper portion of the liner 10 is provided with an upper seal head 101 welded seal together with the periphery of the liner 10. Correspondingly, the bottom of the liner is provided with a lower seal head 102 welded seal together with the periphery of the liner 10.

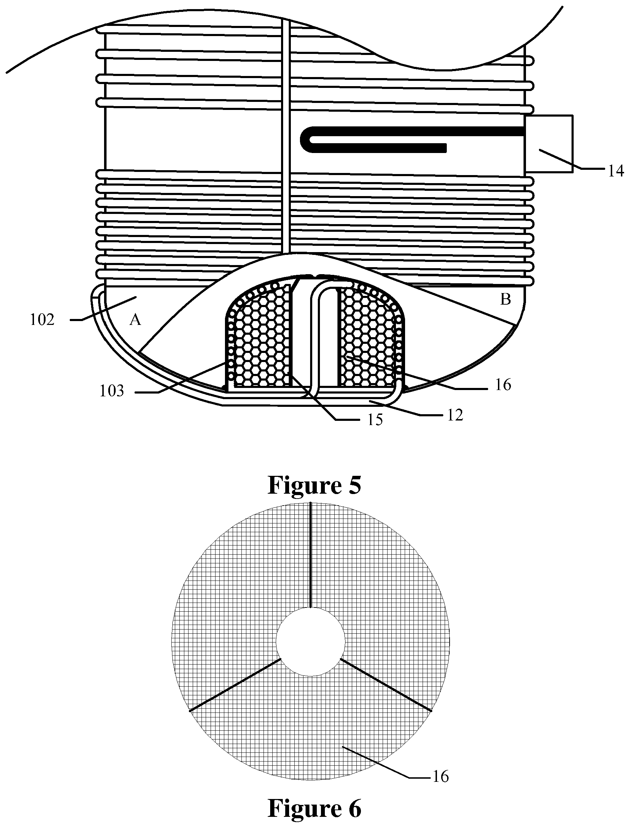

In this embodiment, the bottom of the lower seal head 102 forms a bottom opening in which a cannular metal inner barrel 103 with bottom is provided. The metal inner barrel 103 is arranged to have downward opening, and the edge of the opening thereof is welded to the bottom opening of the lower seal head 102 so that the metal inner barrel 103 forms an inner chamber. The bottom of the metal inner barrel 103 is formed as a ball coronary projecting towards the inside of the liner 10, so that the water scale may be deposited to both sides of the bottom of liner 10, i.e. regions A and B shown in the figures 1 and 5, and thus the heat exchange efficiency may not be influenced. In addition, the purpose for disposing the metal inner barrel 103 is to make the second heat pump coil pipe 12 against the metal inner barrel 103 tightly, and use strong thermal conductivity of the metal to improve the heat exchange efficiency so as to obtain the better thermal conduction effect.

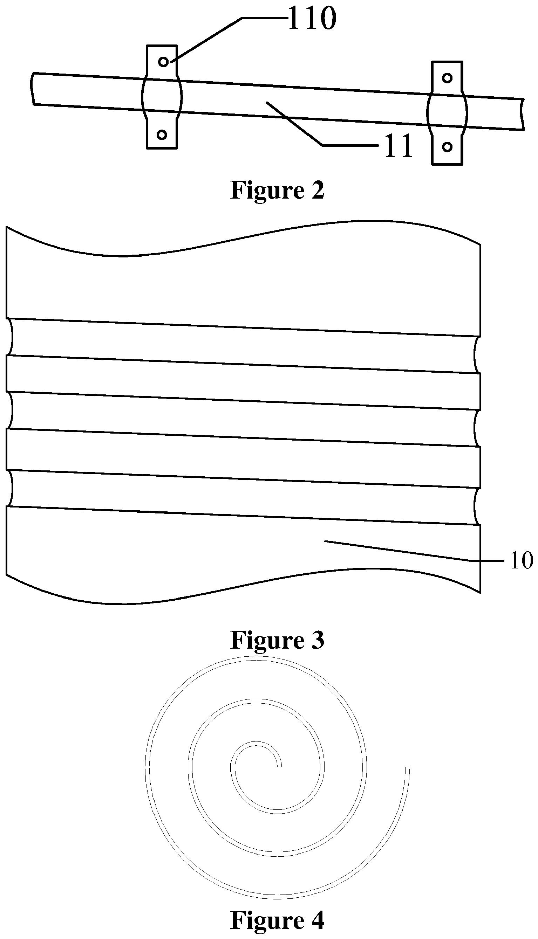

The first heat pump coil pipe 11 winds about the lateral of side wall of the liner 10, as figure 2 shown, the first heat pump coil pipe 11 is fixed on the side wall of liner 10 via a fixation clip 110. The nuts are welded on the side wall of liner 10, and the heat pump coil pipe 11 is fixed by screwing bolts to the nuts through the fixation clip 110. The first heat pump pipe 11 comprises a refrigerant inlet and a refrigerant outlet (in the figure 1, a downward arrow represents the refrigerant inlet, an upwards arrow represents the refrigerant outlet).

Furthermore, the side wall of the liner 10 may be also provided with a concave structure which is spirally extending, as figure 3 shown. The first heat pump coil pipe 11 winds in a manner that closely against the spirally extending concave. In comparison with the smooth structure of the side wall of liner 10, the spirally extending concave structure is capable of increasing the contact area between the first heat pump coil pipe 11 and the side wall of the liner 10, and thus, the heat exchange efficiency may be further improved.

As figure 4 shown, the second heat pump coil pipe 12 is wound into a spiral shape and against the surface of the metal inner barrel 103. The second heat pump coil pipe 12 is fixed through the supporting pipe 15 and the supporting pad layer 16. As figure 6 shown, the supporting pad layer 16 is a cylinder shape which consists of at least 3 supporting pads with sector section. The section of the cylinder is a hollow circle and the diameter of the hollow circle portion of the cylinder is less than the diameter of the circle on the top layer of spiral of the second heat pump coil pipe 12, so that the second heat pump coil pipe 12 may completely contact with the supporting pad layer 16, which is conveniently for fixing solidly. The supporting pipe 15 is formed as a wedge shape cylinder. The diameter of top portion of the supporting pipe 15 is greater than the diameter of the hollow circle portion of the supporting pad layer 16, and less than the top circle diameter of spiral of the second heat pump coil pipe 12 so that the second heat pump coil pipe 12 is fixed solidly in a similar way. The fixation principle of the second heat pump coil pipe 12 is: first, the supporting pad layer 16 with a hollow circle section is filled in a hemispheric concave chamber, it is not difficult to understand that the diameter of the supporting pad layer 16 may be slightly greater than the diameter of the hemispheric concave chamber so as to achieve the better fixation effect; second, the supporting pipe 15 is wedged into the hollow circle portion of the supporting pad layer 16, and the second heat pump coil pipe 12 is fixed by using the swelling plug principle of the wedge cylinder of the support pipe 15. This method for fixing may omit external fixing parts, such as screw, so that the structure is simple and easy to be dismounted. The supporting pad layer 16 is made from the expandable polystyrene and has certain elasticity.

As figure 5 shown, one end (the lower end opening of the spiral) of the second heat pump coil pipe 12 is connected with the inlet of the first heat pump coil pipe 11 by welding. The welding position is a horizontal plane on which the weld between the intermediate barrel 100 of the liner 10 and the lower seal head 102 locate. The other end (the upper end opening of the spiral) of the second heat pump coil pipe 12 extends from the interior of the support pipe 15 to the outside of the support pad layer 16 and is connected with the outlet of the first heat pump coil pipe 11 by welding. Thus, a heat exchange loop is formed by the connection of the first and second heat pump coil pipe 11, 12. Further, the first and second heat pump coil pipe 11, 12 may form a loop respectively and independently.

The interior of the liner 10 is provided with a first electrical heater 13 disposed on the upper end of said water tank liner 10 and a second electrical heater 14 disposed on the lower end of said water tank liner 10 respectively. Because the water heater in the embodiment is provided with the heat pump coil pipes and the electrical heater, the water heater takes advantage of the energy-saving of the heat pump and has the feature of quick start of the electrical heater as well. Specially, when the water supply volume is smaller, the utilization rate of the energy for heating the entire tank of water consumed by the heat pump coil pipe is decreased, and the expected energy-saving cannot be achieved. Because of the arrangement of the electrical heater, the electrical heater is started to provide part of hot water shortly to achieve the energy-saving. In addition, because of the usage of the electrical heater, the heating efficiency may be improved so as to provide the hot water quickly.

## Claims

1. A water tank for a heat pump water heater, comprising a water tank liner (10) having an intermediate barrel (100) and a lower seal head (102) disposed at the bottom of the intermediate barrel (100);
a first heat pump coil pipe (11) which is wound around the intermediate barrel (100),
wherein the bottom of said lower seal head (102) of the water tank liner (10) has a chamber formed by concaving inwardly;
said water tank further comprising
a second heat pump coil pipe (12) attached on the inner wall of said chamber and a fixation means for fixing said second heat pump coil pipe (12) are provided in said chamber.

2. A water tank for a heat pump water heater according to claim 1, **characterized in that**, said fixation means is made of some elastic materials; said fixation means is embedded to said chamber by its own elastic deformation and compresses said second heat pump coil pipe tightly so as to fix said second heat pump coil pipe in said chamber.

3. A water tank for a heat pump water heater according to claim 2, **characterized in that**, said fixation means comprises a supporting pad layer (16) and a support pipe (15), said supporting pad layer (16) consists of plurality of elastic pad individuals, and has a central hole formed by these pad individuals; said supporting pipe (15) is embedded to the central hole of said supporting pad layer (16).

4. A water tank for a heat pump water heater according to claim 3, **characterized in that**, said supporting pad layer (16) is a supporting pad layer (16) manufactured by the expandable polystyrene.

5. A water tank for a heat pump water heater according to anyone of claims 1 to 4, **characterized in that**, said first heat pump coil pipe (11) is connected to said second heat pump coil pipe (12) for forming a loop.

6. A water tank for a heat pump water heater according to anyone of claims 1 to 4, **characterized in that**, the side wall of said water tank liner (10) is provided with a concave structure extending spirally, said first heat pump coil pipe (11) winds about the concave structure extending spirally by being adjacent to the concave structure.

7. A water tank for a heat pump water heater according to anyone of claims 1 to 4, **characterized in that**, said first heat pump coil pipe (11) is fixed by a fixation clip (110).

8. A water tank for a heat pump water heater according to anyone of claims 1 to 4, **characterized in that**, further comprising a first electrical heater (13) disposed on the interior upper end of said water tank liner (10) and a second electrical heater (14) disposed on the interior lower end of said water tank liner (10).

9. A water tank for a heat pump water heater according to claim 1, **characterized in that**, the bottom of said seal head (102) is provided with a bottom opening in which a metal inner barrel (103) is disposed, wherein the metal inner barrel (103) has a tubular shape with a bottom, the metal inner barrel (103) is disposed in a manner that makes its opening be downward, and the edge of the opening of the metal inner barrel is welded with the edge of the bottom opening of said lower seal head (102) so that said chamber is formed by the metal inner barrel (103).

10. A water tank for a heat pump water heater according to claim 9, **characterized in that**, the bottom of the metal inner barrel (103) is formed as a ball coronary projecting towards the inside of the water tank liner (10).

## Patentansprüche

1. Wassertank für einen Wärmepumpen-Warmwasserbereiter, umfassend
ein Wassertankgehäuse (10) mit einem Zwischenzylinder (100) und einem unteren Dichtungskopf (102), der am Boden des Zwischenzylinders (100) angeordnet ist;
ein erstes Wärmepumpenwickelrohr (11), das um den Zwischenzylinder (100) gewickelt ist,
wobei der Boden des unteren Dichtungskopfes (102) des Wassertankgehäuses (10) eine Kammer aufweist, die nach innen konkav ausgebildet ist;
wobei der Wassertank weiterhin umfasst
ein zweites an der Innenwand der Kammer angebrachtes Wärmepumpenwickelrohr (12) und ein Befestigungsmittel zum Befestigen des zweiten Wärmepumpenwickelrohrs (12), die in der Kammer vorgesehen sind.

2. Wassertank für einen Wärmepumpen-Warmwasserbereiter nach Anspruch 1, **dadurch gekennzeichnet, dass** das Befestigungsmittel aus elastischen Materialien hergestellt ist; das Befestigungsmittel durch seine eigene elastische Verformung in der Kammer eingebettet ist und das zweite Wärmepumpenwickelrohr eng zusammendrückt, um das zweite Wärmepumpenrohr in der Kammer zu fixieren.

3. Wassertank für einen Wärmepumpen-Warmwasserbereiter nach Anspruch 2, **dadurch gekennzeichnet, dass** das Befestigungsmittel eine Stützpolsterschicht (16) und ein Stützrohr (15) aufweist, die Stützpolsterschicht (16) aus einer Vielzahl von elastischen Polstereinzelteilen besteht und ein mittiges Loch aufweist, das durch diese Polstereinzelteile gebildet wird; das Stützrohr (15) in das mittige Loch der Stützpolsterschicht (16) eingebettet ist.

4. Wassertank für einen Wärmepumpen-Warmwasserbereiter nach Anspruch 3, **dadurch gekennzeichnet, dass** die Stützpolsterschicht (16) eine Stützpolsterschicht (16) ist, die aus dehnbarem Polystyrol hergestellt ist.

5. Wassertank für einen Wärmepumpen-Warmwasserbereiter nach einem der Ansprüche 1 bis 4, **dadurch gekennzeichnet, dass** das erste Wärmepumpenwickelrohr (11) mit dem zweiten Wärmepumpenwickelrohr (12) verbunden ist, um eine Schleife zu bilden.

6. Wassertank für einen Wärmepumpen-Warmwasserbereiter nach einem der Ansprüche 1 bis 4, **dadurch gekennzeichnet, dass** die Seitenwand des Wassertankgehäuses (10) mit einer sich spiralförmig erstreckenden konkaven Struktur versehen ist, wobei sich das erste Wärmepumpenwickelrohr (11) um die sich spiralförmig erstreckende konkave Struktur windet, indem sie an der konkaven Struktur anliegt.

7. Wassertank für einen Wärmepumpen-Warmwasserbereiter nach einem der Ansprüche 1 bis 4, **dadurch gekennzeichnet, dass** das erste Wärmepumpenwickelrohr (11) durch eine Befestigungsklemme (110) befestigt ist.

8. Wassertank für einen Wärmepumpen-Warmwasserbereiter nach einem der Ansprüche 1 bis 4, **dadurch gekennzeichnet, dass** er weiterhin ein erstes elektrisches Heizelement (13), das an dem inneren oberen Ende des Wassertankgehäuses (10) angeordnet ist, und ein zweites elektrisches Heizelement (14), das an dem inneren unteren Ende des Wassertankgehäuses (10) angeordnet ist, umfasst.

9. Wassertank für einen Wärmepumpen-Warmwasserbereiter nach Anspruch 1, **dadurch gekennzeichnet, dass** der Boden des Dichtungskopfes (102) mit einer Bodenöffnung versehen ist, in der ein Metallinnenzylinder (103) angeordnet ist, wobei der Metallinnenzylinder (103) eine Rohrform mit einem Boden aufweist, der Metallinnenzylinder (103) so angeordnet ist, dass seine Öffnung nach unten gerichtet ist, und der Rand der Öffnung des Metallinnenzylinders mit dem Rand der Bodenöffnung des unteren Dichtungskopfes (102) verschweißt ist, so dass die Kammer durch den Metallinnenzylinder (103) gebildet ist.

10. Wassertank für einen Wärmepumpen-Warmwasserbereiter nach Anspruch 9, **dadurch gekennzeichnet, dass** der Boden des Metallinnenzylinders (103) als Kugelkoronar ausgebildet ist, der zur Innenseite des Wassertankgehäuses (10) vorsteht.

## Revendications

1. Réservoir d'eau pour chauffe-eau à pompe à chaleur, comprenant
une chemise de réservoir d'eau (10) présentant une cuve intermédiaire (100) et une tête de scellage inférieure (102) disposée au fond de la cuve intermédiaire (100) ;
un premier serpentin de pompe à chaleur (11) enroulé autour de la cuve intermédiaire (100),
dans lequel le fond de ladite tête de scellage inférieure (102) de la chemise de réservoir d'eau (10) présente une chambre formée par effet concave vers l'intérieur ;
ledit réservoir d'eau comprenant en outre
un second serpentin de pompe à chaleur (12) attaché sur la paroi interne de ladite chambre et un moyen de fixation pour fixer ledit second serpentin de pompe à chaleur (12) sont fournis dans ladite chambre.

2. Réservoir d'eau pour chauffe-eau à pompe à chaleur selon la revendication 1, **caractérisé en ce que** ledit moyen de fixation est réalisé dans certains matériaux élastiques ; ledit moyen de fixation est encastré contre ladite chambre par sa propre déformation élastique et comprime de manière serrée ledit second serpentin de pompe à chaleur de façon à fixer ledit second serpentin de pompe à chaleur dans ladite chambre.

3. Réservoir d'eau pour chauffe-eau à pompe à chaleur selon la revendication 2, **caractérisé en ce que** ledit moyen de fixation comprend une couche de tampons de support (16) et un tuyau de support (15), ladite couche de tampons de support (16) consistant en une pluralité de tampons élastiques individuels, et présentant un orifice central formé par ces tampons individuels ; ledit tuyau de support (15) est encastré contre l'orifice central de ladite couche de tampons de support (16).

4. Réservoir d'eau pour chauffe-eau à pompe à chaleur selon la revendication 3, **caractérisé en ce que** ladite couche de tampons de support (16) est une couche de tampons de support (16) fabriquée en polystyrène expansé.

5. Réservoir d'eau pour chauffe-eau à pompe à chaleur selon l'une quelconque des revendications 1 à 4, **caractérisé en ce que** ledit premier serpentin de pompe à chaleur (11) est raccordé audit second serpentin de pompe à chaleur (12) pour former une boucle.

6. Réservoir d'eau pour chauffe-eau à pompe à chaleur selon l'une quelconque des revendications 1 à 4, **caractérisé en ce que** la paroi latérale de ladite chemise de réservoir d'eau (10) est dotée d'une structure concave s'étendant de manière spiralée, ledit premier serpentin de pompe à chaleur (11) s'enroulant autour de la structure concave s'étendant de manière spiralée par adjacence à la structure concave.

7. Réservoir d'eau pour chauffe-eau à pompe à chaleur selon l'une quelconque des revendications 1 à 4, **caractérisé en ce que** ledit premier serpentin de pompe à chaleur (11) est fixé par un clip de fixation (110).

8. Réservoir d'eau pour chauffe-eau à pompe à chaleur selon l'une quelconque des revendications 1 à 4, **caractérisé en ce qu'**il comprend en outre un premier radiateur électrique (13) disposé sur l'extrémité intérieure supérieure de ladite chemise de réservoir d'eau (10) et un second radiateur électrique (14) disposé sur l'extrémité intérieure inférieure de ladite chemise de réservoir d'eau (10).

9. Réservoir d'eau pour chauffe-eau à pompe à chaleur selon la revendication 1, **caractérisé en ce que** le fond de ladite tête de scellage (102) est doté d'une ouverture de fond dans laquelle une cuve interne métallique (103) est disposée, dans lequel la cuve interne métallique (103) a une forme tubulaire présentant un fond, la cuve interne métallique (103) est disposée de manière à ce que son ouverture soit tournée vers le bas, et le bord de l'ouverture de la cuve interne métallique est soudé avec le bord de l'ouverture de fond de ladite tête de scellage inférieure (102) de telle sorte que ladite chambre soit formée par la cuve interne métallique (103).

10. Réservoir d'eau pour chauffe-eau à pompe à chaleur selon la revendication 9, **caractérisé en ce que** le fond de la cuve interne métallique (103) a une forme coronaire sphérique saillant vers l'intérieur de la chemise de réservoir d'eau (10).
